# EUROPÄISCHE PATENTSCHRIFT

(11) **EP 3 474 305 B1**
(45) Veröffentlichungstag und Bekanntmachung des Hinweises auf die Patenterteilung: **20.07.2022**
(21) Anmeldenummer: 17197063.5
(22) Anmeldetag: 18.10.2017
(51) Int. Cl.: H01H 21/28, E05B 15/02, H01H 27/08, E05B 47/00, E05B 63/00, H01H 27/06, F16P 3/08

(54) **SICHERHEITSSCHALTER**
SAFETY SWITCH
COMMUTATEUR DE SÉCURITÉ

(43) Veröffentlichungstag der Anmeldung: 24.04.2019
(73) Patentinhaber: EUCHNER GmbH + Co. KG, 70771 Leinfelden-Echterdingen (DE)
(72) Erfinder: Grimm, Ilo, 71111 Waldenbuch (DE)
(74) Vertreter: Ruckh, Rainer Gerhard

(56) Entgegenhaltungen:
- WO-A1-2016/058718
- AU-A- 1 811 188
- DE-C1- 4 240 283
- US-A- 4 912 290

## Beschreibung

Die Erfindung betrifft einen Sicherheitsschalter.

Ein derartiger Sicherheitsschalter bildet mit einem zugeordneten Betätiger eine Sicherheitsschalteranordnung, die im Bereich der Sicherheitstechnik eingesetzt wird. Für den Einsatz im Bereich der Sicherheitstechnik, insbesondere im Bereich des Personenschutzes ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die US 4 912 290 A betrifft eine elektrische Kontaktstruktur für einen Schließzylinder in einer Tür eines Fahrzeugs oder dergleichen. Die Kontaktstruktur des Schließzylinders umfasst ein Paar von Kontaktelementen, die schwenkbar gelagert sind. Weiterhin ist jedem Kontaktelement eine Feder zugeordnet. Die Federkräfte der Federn bewirken, dass die Kontaktelemente in Richtung eines Schlüssellochs im Schließzylinder hin ausgelenkt werden. Diese Bewegung wird durch Stopper begrenzt. Wird ein Schlüssel in das Schlüsselloch eingeführt, werden die Kontaktelemente des Schließzylinders durch die Federkräfte der Federn gegen korrespondierende elektrische Kontakte des Schlüssels gedrückt, wodurch eine elektrische Kontaktierung zwischen Schließzylinder und Schlüssel bewirkt ist.

Der Erfindung liegt die Aufgabe zugrunde, einen Sicherheitsschalter bereitzustellen, der bei kleiner Baugröße eine zuverlässige Sicherungsfunktion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sicherheitsschalter mit einer Verriegelungseinheit, mittels derer ein zugeordneter Betätiger in einer Verriegelungsstellung gehalten ist. Die Verriegelungseinheit weist eine Anordnung von Verriegelungsbacken auf Jede Verrieselunssbacke ist mittels einer Federeinheit federnd selasert Die Verriegelungsbacken sind konzentrisch angeordnet und jeweils mit einem ersten freien Ende einander zugeordnet und begrenzen eine Einführöffnung. Mittels der von der Federeinheit generierten Federkräfte sind die Verriegelungsbacken in Verriegelungsposition gehalten. Der Betätiger wird mit seinem vorderen freien Ende durch die Einführöffnung geführt, wobei der Durchmesser der vorderen Enden des Betätigers etwas größer als der Durchmesser der von den freien Enden der Verriegelungsbacken begrenzten Einführöffnung ist, so dass bei Führen des vorderen Endes des Betätigers die Verriegelungsbacken gegen die Federkräfte der Federeinheiten ausgelenkt werden wodurch die Einführöffnung vergrößert ist. Wenn der Betätiger in seiner Verriegelungsstellung eingeführt ist, kehren die Verriegelungsbacken durch die Federkräfte der Federeinheiten in ihre Verriegelungsposition zurück und das vordere Ende des Betätigers wird hintergriffen, wodurch eine sichere Verriegelung und Rastfunktion des Betätigers gewährleistet ist.

Ein wesentlicher Vorteil besteht darin, dass der Sicherheitsschalter eine kleine und kompakte Bauform aufweist.

Der Sicherheitsschalter ist dabei einfach montierbar und kann flexibel in Kombination mit einem Betätiger zur Ausbildung einer Sicherheitsschalteranordnung eingesetzt werden. Die so gebildete Sicherheitsschalteranordnung kann allgemein im Bereich der Sicherheitstechnik eingesetzt werden, insbesondere zur Sicherung des Zugangs zu einem Gefahrenbereich.

Das Funktionsprinzip der Verriegelungseinheit des erfindungsgemäßen Sicherheitsschalters ist derart, dass der Betätiger mit seinem vorderen freien Ende durch die Einführöffnung geführt wird, wobei der Durchmesser der vorderen Enden des Betätigers etwas größer als der Durchmesser der von den freien Enden der Verriegelungsbacken begrenzten Einführöffnung ist, so dass bei Führen des vorderen Endes des Betätigers die Verriegelungsbacken gegen die Federkräfte der Federeinheit ausgelenkt werden. Die Geometrie des Betätigers ist so an die Verriegelungseinheit angepasst, dass dann, wenn der Betätiger in seine Verriegelungsstellung eingeführt ist, die Verriegelungsbacken durch die Federkräfte der Federeinheit in ihre Verriegelungsposition zurückkehren und das vordere Ende des Betätigers hintergreifen, wodurch eine sichere Verriegelung und Rastfunktion des Betätigers gewährleistet ist.

Besonders vorteilhaft ist der Betätiger derart an die Verriegelungseinheit des Sicherheitsschalters angepasst, dass dieser einen Betätigerkopf aufweist, der über ein Verbindungselement mit einem Grundkörper des Betätigers verbunden ist. Die Längsachse des Verbindungselements ist vorteilhaft in einer stabilen Grundstellung senkrecht zur Oberfläche des Grundkörpers orientiert und weist in axialer Richtung eine hohe Steifigkeit auf. Damit kann der Betätigerkopf mit Anpressdruck gegen die Einführöffnung der Verriegelungseinheit geführt werden, wodurch die Verriegelungsbacken gegen die Federkräfte der Federeinheit ausgelenkt werden und der Betätiger in die Verriegelungsstellung überführt wird. In der Verriegelungsstellung des Betätigers sind die Verriegelungsbacken in ihre Verriegelungsposition überführt und hintergreifen den Betätiger so, dass dieser in der Verriegelungsstellung sicher gehalten ist. Hierbei ist wesentlich, dass der Durchmesser des Verbindungselements kleiner oder gleich dem Durchmesser der Einführöffnung ist, so dass die Verriegelungsbacken nach Passieren des Betätigerkopfes selbstständig in ihre Verriegelungsposition zurückkehren können.

Durch die von der Federeinheit ausgeübten Federkräfte sind die Verriegelungsbacken kraftbeaufschlagt in der Verriegelungsposition gehalten, wodurch eine sichere Verriegelung und Rastfunktion ermöglicht ist.

Ein Vorteil der erfindungsgemäßen Verriegelungseinheit besteht darin, dass zum Einführen des Betätigers in die Verriegelungseinheit die einzelnen Hubwege der Verriegelungsbacken bei Passieren des Betätigerkopfes gering gehalten werden, da die Hubbewegung auf mehrere Verriegelungsbacken verteilt ist.

Weiter vorteilhaft ist, dass der Betätiger nicht nur unter Ausüben von Drucckräften in die Verriegelungsstellung überführt werden kann, sondern durch Ausüben von Zugkräften aus der Verriegelungseinheit gelöst werden kann, wodurch eine Entriegelung des Betätigers unter Last ermöglicht ist.

Eine geometrisch vorteilhafte Ausgestaltung der Verriegelungseinheit ist dadurch gegeben, dass die Längsachsen der Verriegelungsbacken in radialer Richtung verlaufen, wobei sich die Verlängerungen der Längsachsen im Mittelpunkt der Einführöffnung schneiden und wobei die Verriegelungsbacken in Richtung ihrer Längsachsen auslenkbar sind.

Diese Anordnung ermöglicht bei kleinen Hubwegen der Verriegelungsbacken ein Einführen des Betätigers in die Einführöffhung. Zudem ist eine direkte, gute Kraftübertragung der Federkräfte über die Verriegelungsbacken auf den Betätiger gegeben, so dass dieser sicher in der Verriegelungsstellung, das heißt einer Raststellung gehalten ist.

Weiterhin vorteilhaft bilden die Verriegelungsbacken eine drehsymmetrische Anordnung, wobei zweckmäßig der Betätigerkopf des Betätigers ebenfalls rotationssymmetrisch, insbesondere kugelförmig ist. Damit ergibt sich eine symmetrische gleichförmige Kräfteverteilung der von den Verriegelungsbacken auf den Betätigerkopf ausgeübten Kräfte. Hierzu sind insbesondere die einzelnen Verriegelungsbacken identisch ausgebildet.

Gemäß einer besonders vorteilhaften Ausgestaltung sind drei Verriegelungsbacken vorgesehen, deren Längsachsen jeweils um 120° versetzt zueinander angeordnet sind.

Gemäß einer besonders vorteilhaften Ausgestaltung der Erfindung ist der Verriegelungseinheit eine Zuhalteeinheit zugeordnet, mittels der die Verriegelungsbacken in ihren Verriegelungspositionen zugehalten sind.

Mit dieser Zuhaltung wird eine weitere Sicherheitsfunktion des Sicherheitsschalters bereitgestellt.

Besonders vorteilhaft bildet die Zuhalteeinheit eine Kulisse mit einem Hohlraum aus. Dieser Hohlraum ist von einem eine Innenkontur ausbildenden Wandsegment begrenzt. In dem Hohlraum sind die Verriegelungsbacken angeordnet. Segmente der Innenkontur bilden Mittel zur Zuhaltung der Verriegelungsbacken aus.

Diese Kulisse weist einen mechanisch einfachen Aufbau auf. Weiterhin ist vorteilhaft, dass mit der Kulisse simultan eine Zuhaltung aller Verriegelungsbacken realisiert wird.

Die Kulisse bildet vorteilhaft einen scheibenförmigen Körper, der an die Geometrien der Verriegelungsbacken angepasst ist und nur einen geringen Einbauraum beansprucht, wodurch auch eine kleine Bauform des gesamten Sicherheitsschalters realisiert wird.

Die Kulisse ist vorteilhaft um eine Drehachse drehbar, wobei die Drehachse vorteilhaft senkrecht zur Scheibenebene der Kulisse verläuft. Die Drehbewegung der Kulisse wird mit einem elektrischen Antrieb erzeugt.

Die Funktionsweise der so gebildeten Zuhalteeinheit ist derart, dass in ersten Drehstellungen der Kulisse die Segmente der Innenkontur dicht an den zweiten freien Enden der Verriegelungsbacken anliegen, wodurch eine Bewegung der Verriegelungsbacken aus der Verriegelungsposition heraus blockiert ist und somit die Zuhaltung bewirkt ist.

Weiterhin liegen in zweiten Drehstellungen der Kulisse die zweiten freien Enden der Verriegelungsbacken in Abstand zur Kulisse, so dass diese gegen die Federkräfte der Federeinheit auslenkbar sind.

Durch die rotationssymmetrische Ausbildung der Verriegelungsbacken und die daran angepasste rotationssymmetrische Ausbildung der die Zuhaltung bewirkenden Segmente der Kulisse, kann der elektrische Antrieb in nur eine Drehrichtung drehend ausgebildet sein, um die Kulisse in diskreten Winkelschritten weiter zu drehen, um einerseits die Zuhaltung der Verriegelungsbacken zu bewirken oder andererseits die Zuhaltung aufzuheben.

Hierbei wird vorteilhaft die identische Ausbildung der Verriegelungsbacken und deren rotationssymmetrische Anordnung in der Verriegelungseinheit ausgenutzt. Die Segmente der Kulisse, mit denen die Zuhaltung bewirkt wird, sind entsprechend ihrer Anzahl und Symmetrie an diese Verriegelungsbacken angepasst, so dass jedes Segment der Kulisse zur Zuhaltung einer beliebigen Verriegelungsbacke eingesetzt werden kann. Damit muss zur Überführung der Verriegelungsbacken in den zugehaltenen oder nicht zugehaltenen Zustand nur um entsprechend kleine Winkel weitergedreht werden. Weist die Verriegelungseinheit beispielsweise drei identische um 120° versetzte Verriegelungsbacken auf, so muss zum Überführen der Zuhalteeinheit von einem zugehaltenen Zustand der Verriegelungsbacken in einen nicht zugehaltenen Zustand die Kulisse nur um 60° weitergedreht werden und dann um 60° in die gleiche Richtung weiter gedreht werden, um wieder eine Zuhaltung der Verriegelungsbacken zu bewirken.

Die so ausgebildete Zuhalteeinheit weist bei einer hohen Funktionssicherheit einen konstruktiv einfachen Aufbau auf.

Besonders vorteilhaft ist dem elektrischen Antrieb eine mechanische Hilfsentriegelung zugeordnet.

Durch eine Betätigung der Hilfsentriegelung, beispielsweise mittels eines Schraubendrehers kann, der Antrieb mechanisch weitergedreht werden, wodurch die Zuhaltung der Zuhalteeinheit aufgehoben werden kann. Dies ist insbesondere im stromlosen Zustand des Antriebs sinnvoll.

Gemäß einer vorteilhaften Ausgestaltung sind die Positionen der Verriegelungsbacken mittels Sensoren überwacht.

Mit den Sensoren, die beispielsweise von Reflexionslichtschranken gebildet sind, kann die Verriegelungsfunktion der Verriegelungsbacken überwacht werden. Insbesondere können die Verriegelungspositionen der Verriegelungsbacken kontrolliert werden.

Weiter vorteilhaft ist die Verriegelungsstellung des Betätigers dadurch überwacht, dass Signale eines Transponders im Betätigerkopf in einer Leseeinheit des Sicherheitsschalters erfasst werden.

Durch diese Überwachungsfunktion können Fehler bei der Verriegelung des Betätigers aufgedeckt werden. Dies stellt eine wesentliche Maßnahme zur Erfüllung des für den Einsatz der Sicherheitsschalteranordnung im Bereich der Sicherheitstechnik geforderten Sicherheitsniveaus dar.

Die Erfindung wird im Folgenden anhand der Zeichnungen erläutert. Es zeigen:
- Figur 1: Ausführungsbeispiel der erfindungsgemäßen Sicherheitsschalteranordnung mit einem Sicherheitsschalter und einem Betätiger.
- Figur 2: Längsschnittdarstellung des Betätigers der Sicherheitsschalteranordnung gemäß Figur 1.
- Figur 3: Längsschnittdarstellung des Sicherheitsschalters gemäß Figur 1.
- Figur 4: Darstellung eines Ausschnitts des Sicherheitsschalters gemäß Figur 1 mit den Komponenten einer Verriegelungseinheit und einer Zuhalteeinheit
a) bei deaktivierter Zuhaltung
b) bei aktivierter Zuhaltung
- Figur 5 a - c: Unterschiedliche Zustände der Verriegelungseinheit und Zuhalteeinheit bei Einführen des Betätigers in eine Verriegelungsstellung.

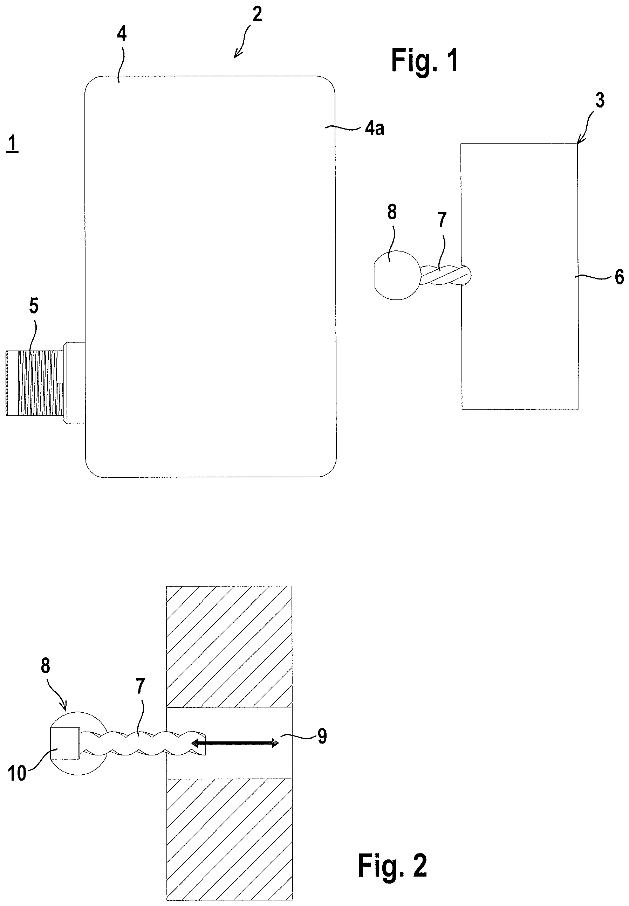

Figur 1 zeigt schematisch ein Ausführungsbeispiel einer Sicherheitsschalteranordnung 1 mit einem Sicherheitsschalter 2 und einem Betätiger 3.

Mit dieser Sicherheitsschalteranordnung 1 erfolgt beispielsweise die Sicherung einer Schutztür als Zugang zu einem Gefahrenbereich. Der Betätiger 3 kann an der Schutztür angeordnet sein, der Sicherheitsschalter 2 kann an einen die Türöffnung, die mit der Schutztür verschlossen wird, begrenzenden Rahmen angeordnet werden.

Die Komponenten des Sicherheitsschalters 2 sind in einem Gehäuse 4 integriert, an dem ein Kabelanschluss 5 zum Anschluss an externe Einheiten ausmündet.

Wie aus Figur 1 und insbesondere aus Figur 2 ersichtlich, weist der Betätiger 3 einen Grundkörper 6 auf, in welchem ein Verbindungselement 7 gelagert ist. Das Verbindungselement 7 ist von einem langgestreckten Körper gebildet, dessen Querschnitt über seine gesamte Länge zumindest näherungsweise konstant ist.

Das Verbindungselement 7 ist mit seinem ersten freien Ende so im Grundkörper 6 gelagert, dass die Längsachse des Verbindungselements 7 senkrecht zur Oberfläche des Grundkörpers 6 orientiert ist. Am anderen Ende des Verbindungselements 7 ist ein Betätigerkopf 8 gelagert. Der Betätigerkopf 8 ist im vorliegenden Fall kugelförmig ausgebildet. Prinzipiell kann der Betätigerkopf 8 auch von einem anderen rotationssymmetrischen Körper gebildet sein. Prinzipiell kann der Betätigerkopf 8 auch einen polygonalen Querschnitt aufweisen. In jedem Fall weist der Betätigerkopf 8 eine größere Querschnittsfläche als das Verbindungselement 7 auf, so dass der Betätigerkopf 8 in seiner gesamten Querschnittsebene über das Verbindungselement 7 hervorsteht.

Das Verbindungselement 7 kann prinzipiell aus Kunststoff oder aus einem metallischen Werkstoff bestehen. Im vorliegenden Fall besteht das Verbindungselement 7 aus einem kurzen Stahlseil.

Allgemein besteht das Verbindungselement 7 aus einem Werkstoff, der eine hohe Steifigkeit des Verbindungselements 7 in axialer Richtung gewährleistet und der das Verbindungselement 7 in der in den Figuren 1 und 2 dargestellten Grundeinstellung, insbesondere bei Einwirken der Schwerkraft hält. Gleichzeitig weist das Verbindungselement 7 eine Flexibilität, das heißt elastische Verformbarkeit derart auf, dass es unter Krafteinwirkung so verformt werden kann, dass der Betätigerkopf 8 in einer Ebene quer zur Längsachse ausgelenkt werden kann.

Wie in Figur 2 mit dem Doppelpfeil aufgezeigt, ist das Verbindungselement 7 in einer Führung 9 des Grundkörpers 6 so gelagert, dass es aus dem Grundkörper 6 herausgezogen oder eingeschoben werden kann, so dass die Länge des über dem Grundkörper 6 hervorstehenden Teils des Verbindungselements 7 variiert werden kann. In jeder Position kann das Verbindungselement 7 fixiert werden.

Wie aus Figur 2 weiter ersichtlich, ist im Betätigerkopf 8 ein Transponder 10 gelagert.

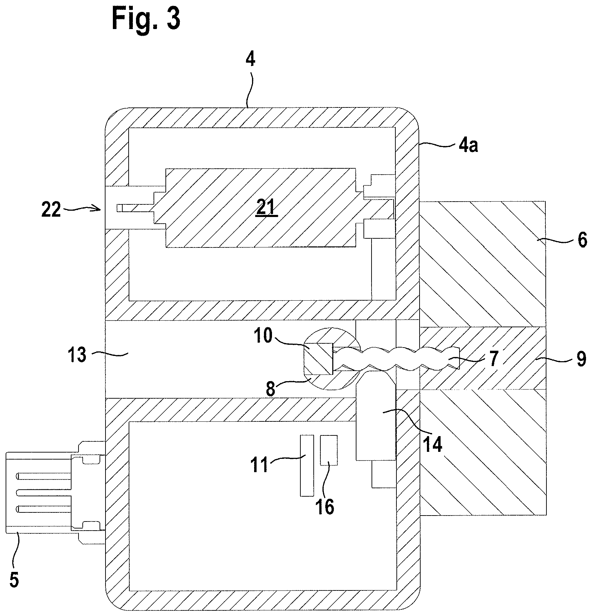

Wie Figur 3 zeigt, ist im Sicherheitsschalter 2 eine Leseeinheit in Form einer Lesespule 11 angeordnet. Mit der Lesespule 11 können Signale des Transponders 10 im Betätigerkopf 8 erfasst werden, wenn der Betätiger 3 in eine Verriegelungsstellung, das heißt Raststellung im Sicherheitsschalter 2 eingefahren ist, wie Figur 3 weiterhin zeigt.

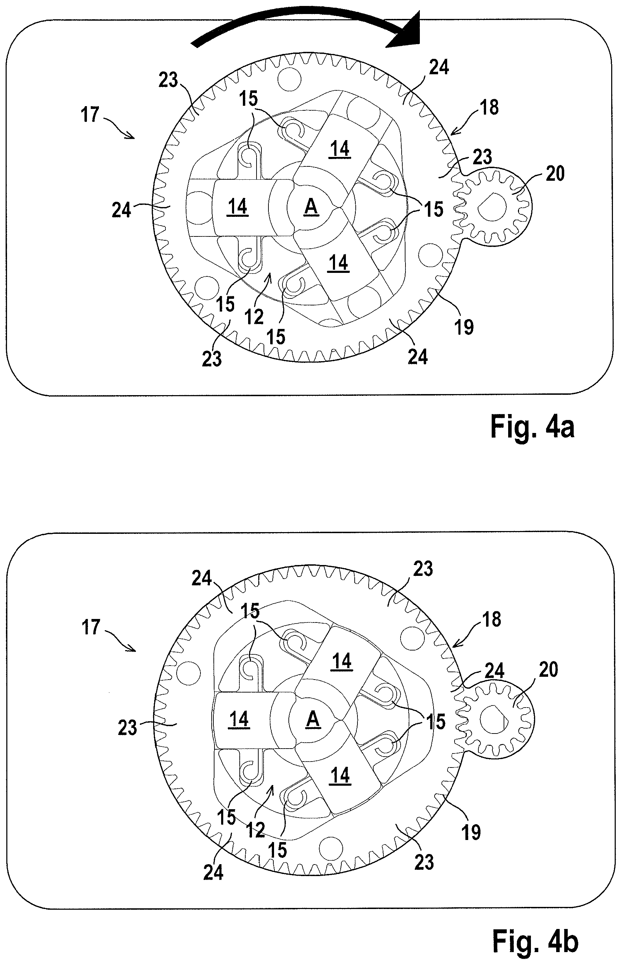

Zur sicheren Verriegelung des Betätigers 3 in seiner Verriegelungsstellung weist der Sicherheitsschalter 2 eine Verriegelungseinheit 12 auf, deren Komponenten in einer Draufsicht in den Figuren 4a, b dargestellt sind. Die Verriegelungseinheit 12 befindet sich im Bereich hinter der Frontwand 4a des Gehäuses 4 des Sicherheitsschalters 2.

In der Verriegelungsstellung des Betätigers 3 liegt der Betätigerkopf in 8 einem Führungskanal 13 im Sicherheitsschalter 2. Die Komponenten der Verriegelungseinheit 12 hintergreifen dabei den Betätigerkopf 8 und rasten so den Betätiger 3 ein, das heißt der Betätiger 3 ist gegen ein Herauslösen aus dem Sicherheitsschalter 2 gesichert.

Die Verriegelungseinheit 12 weist im vorliegenden Fall drei identisch ausgebildete Verriegelungsbacken 14 auf, die konzentrisch so angeordnet sind, dass deren erste freie Enden eine Einführöffnung A begrenzen. Die Längsachsen der Verriegelungsbacken 14 verlaufen in radialer Richtung. Die Verlängerungen dieser Längsachsen schneiden sich im Zentrum der Einführöffnung A. Jeder Verriegelungsbacke 14 ist mittels einer Federeinheit 15, die im vorliegenden Fall von einer einzelnen Feder gebildet ist, federnd gelagert. Die Federkräfte halten die Verriegelungsbacken 14 in ihrer Verriegelungsposition, das heißt Raststellung, die in den Figuren 4a, b dargestellt sind.

Die Verriegelungsbacken 14 sind rotationssymmetrisch jeweils um 120° versetzt zueinander angeordnet. Die Verriegelungspositionen der Verriegelungsbacken 14 werden jeweils mit einer Reflexionslichtschranke 16 überwacht.

Der Verriegelungseinheit 12 ist eine Zuhalteeinheit 17 zugeordnet. Die Zuhalteeinheit 17 weist eine scheibenförmige Kulisse 18 auf. Die Außenkontur der Kulisse 18 weist eine Zahnung 19 auf, die in Eingriff mit einem Zahnrad 20 ist. Das Zahnrad 20 kann mittels eines elektrischen Antriebs in Form eines Elektromotors 21 in eine Drehbewegung versetzt werden, wodurch sich auch die Kulisse 18 um eine senkrecht zur Scheibenachse verlaufenden Drehachse dreht.

Dem Elektromotor 21 ist eine mechanische Hilfsentriegelung 22 zugeordnet. Im stromlosen Zustand des Sicherheitsschalters 2 kann durch Betätigen der Hilfsentriegelung 22, beispielsweise mit einem Schraubendreher, der Elektromotor 21 und damit die Kulisse 18 mechanisch weitergedreht werden.

Die Kulisse 18 weist einen zentralen Hohlraum auf, in welchem die Verriegelungsbacken 14 der Verriegelungseinheit 12 angeordnet sind. Der Hohlraum wird von einem eine Innenkontur bildenden Wandsegment der Kulisse 18 begrenzt.

Die Symmetrie der Innenkontur ist an die Symmetrie der Verriegelungsbacken 14 angepasst. Die Innenkontur weist dementsprechend drei identisch ausgebildete, um 120° gedrehte Segmente 23 auf, die zur Zuhaltung der Verriegelungsbacken 14 dienen. Jeweils zwei benachbarte Segmente 23 sind durch ein Zwischensegment 24 der Innenkontur verbunden. Auch die Zwischensegmente 24 sind identisch ausgebildet.

Figur 4a zeigt die Zuhalteeinheit 17 bei deaktivierter Zuhaltung. Hier ist die Kulisse 18 mittels des Elektromotors 21 in eine Drehstellung gedreht, in der die Zwischensegmente 24 im Bereich der Verriegelungsbacken 14 liegen. Die Zwischensegmente 24 sind so ausgebildet, dass diese in Abstand zu den hinteren, zweiten freien Enden liegen. Dadurch können die Verriegelungsbacken 14 gegen die Federkräfte der Federeinheit 15 aus ihren Verriegelungspositionen, das heißt Raststellungen heraus ausgelenkt werden und in Richtung der Zwischensegmente 24 bewegt werden.

Figur 4b zeigt die Zuhalteeinheit 17 bei aktivierter Zuhaltung. Hier ist die Kulisse 18 mittels des Elektromotors 21 in eine Drehstellung gedreht, in der die Segmente 23 der Innenkontur im Bereich der Verriegelungsbacken 14 liegen. Die Segmente 23 der Innenkontur liegen dicht an den Verriegelungsbacken 14 an, so dass eine Bewegung der Verriegelungsbacken 14 aus den Verriegelungspositionen blockiert ist, wodurch eine Zuhaltung bewirkt ist.

Die Überführung zum Zustand einer deaktivierten Zuhaltung (Figur 4a) in den Zustand einer aktivierten Zuhaltung (Figur 4b) wird dadurch bewirkt, dass die Kulisse 18 in der in Figur 4a dargestellten Richtung um 60° weiter gedreht wird. Durch ein weiteres Drehen der Kulisse 18 um 60° wird dann wieder ein Zustand mit deaktivierter Zuhaltung erhalten und so weiter.

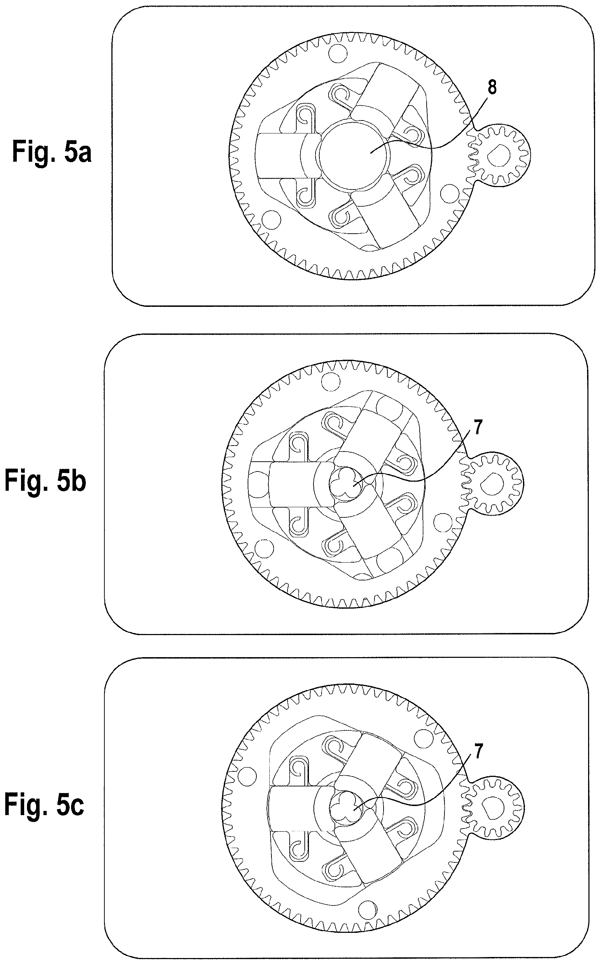

Die Funktionsweise der Verriegelung und Zuhaltung der Sicherheitsschalteranordnung 1 wird anhand der Figuren 5a - c erläutert.

Im Ausgangszustand, beispielsweise bei geöffneter Schutztür liegt der Betätiger 3 in Abstand zur Schutztür. Bei Schließen der Schutztür wird der Betätiger 3 in eine Verriegelungsstellung im Sicherheitsschalter 2 eingefahren.

Zunächst wird hierzu der Betätigerkopf 8 gegen die Einführöffnung A geführt. Da der Betätigerkopf 8 durch die elastische Verformbarkeit des Verbindungselements 7 quer zur Längsachse des Verbindungselements 7 angeordnet werden kann, erfolgt eine Selbstzentrierung des Betätigerkopfes 8 auf die Einführöffnung A. Der Durchmesser des Betätigerkopfes 8 ist größer als der Durchmesser der Einführöffnung A. Daher werden bei Führen des Betätigerkopfes 8 gegen die Einführöffnung A durch vom Betätigerkopf 8 auf die Verriegelungsbacken 14 ausgeübten Druckkräfte ein Auslenken der Verriegelungsbacken 14 aus ihrer Verriegelungsposition heraus bewirkt. Dies ist möglich, da die Zuhaltung der Zuhalteeinheit 17 deaktiviert ist, das heißt die Zwischensegmente 24 liegen im Bereich der Verriegelungsbacken 14. Diese Situation ist in Figur 5a dargestellt. Der Betätigerkopf 8 liegt im Bereich der aufgeweiteten Einführöffnung A. Die Verriegelungsbacken 14 sind aus ihren Verriegelungspositionen durch den Betätigerkopf 8 nach hinten verschoben und liegen an den Zwischensegmenten 24 an.

Darauf wird der Betätiger 3 weiter in den Sicherheitsschalter 2 eingeführt, bis er in der in Figur 3 dargestellten Raststellung, das heißt Verriegelungsstellung liegt. In dieser Verriegelungsstellung hat der Betätigerkopf 8 die Verriegelungsbacken 14 passiert. Damit werden die Verriegelungsbacken 14 durch die Federkräfte in ihre Verriegelungsposition zurückgeführt, so dass deren freie Enden mit wenig Spiel am Verbindungselement 7 des Betätigers 3 anliegen. Die Verriegelungsbacken 14 hintergreifen dann den Betätigerkopf 8, wobei durch die Federkräfte, die die Verriegelungsbacken 14 in ihren Verriegelungspositionen halten, der Betätiger 3 sicher verriegelt und eingerastet ist. Dabei ist zunächst noch die Zuhaltung deaktiviert. Dieser Zustand ist in Figur 5b dargestellt. In diesem Zustand kann noch eine Entriegelung des Betätigers unter Last erfolgen, da der Betätiger 3 mit Zugkraft aus der Verriegelungseinheit 12 herausgezogen werden kann.

Anschließend wird, wie in Figur 5c dargestellt, die Zuhaltung aktiviert, so dass die Kulisse 18 gegen eine Entriegelung gedreht ist.

Bei einer Sicherung einer Schutztür als Zugang zu einem Gefahrenbereich mittels der erfindungsgemäßen Sicherheitsschalteranordnung 1 kann der Sicherheitsschalter 2 dann, wenn eine Verriegelung und Rastung sowie Zuhaltung des Betätigers 3 gegeben ist, ein Schaltsignal ausgeben, das zur Freigabe des Betriebes einer gefahrbringenden Anlage im Gefahrenbereich genutzt werden kann.

### Bezugszeichenliste

- (1): Sicherheitsschalteranordnung
- (2): Sicherheitsschalter
- (3): Betätiger
- (4): Gehäuse
- (4a): Frontwand
- (5): Kabelanschluss
- (6): Grundkörper
- (7): Verbindungselement
- (8): Betätigerkopf
- (9): Führung
- (10): Transponder
- (11): Lesespule
- (12): Verriegelungseinheit
- (13): Führungskanal
- (14): Verriegelungsbacke
- (15): Federeinheit
- (16): Reflexionslichtschranke
- (17): Zuhalteeinheit
- (18): Kulisse
- (19): Zahnung
- (20): Zahnrad
- (21): Elektromotor
- (22): Hilfsentriegelung
- (23): Segmente
- (24): Zwischensegment
- (A): Einführöffnung

## Patentansprüche

1. Sicherheitsschalter (2) mit einer Verriegelungseinheit (12), mittels derer ein zugeordneter Betätiger (3) in einer Verriegelungsstellung gehalten ist, **dadurch gekennzeichnet, dass** die Verriegelungseinheit (12) eine Anordnung von Verriegelungsbacken (14) aufweist, wobei jede Verriegelungsbacke mittels einer Federeinheit (15) federnd gelagert ist, dass die Verriegelungsbacken (14) konzentrisch angeordnet sind und jeweils mit einem ersten freien Ende einander zugeordnet sind und eine Einführöffnung (A) begrenzen, dass die Verriegelungsbacken mittels der von den Federeinheiten (15) generierten Federkräfte in Verriegelungspositionen gehalten sind, dass der Betätiger (3) mit seinem vorderen freien Ende durch die Einführöffnung (A) geführt wird, wobei der Durchmesser der vorderen Enden des Betätigers (3) etwas größer als der Durchmesser der von den freien Enden der Verriegelungsbacken begrenzten Einführöffnung (A) ist, so dass bei Führen des vorderen Endes des Betätigers (3) die Verriegelungsbacken gegen die Federkräfte der Federeinheiten (15) ausgelenkt werden wodurch die Einführöffnung (A) vergrößert ist, und dass dann, wenn der Betätiger (3) in seiner Verriegelungsstellung eingeführt ist, die Verriegelungsbacken durch die Federkräfte der Federeinheit (15) in ihre Verriegelungsposition zurückkehren und das vordere Ende des Betätigers (3) hintergreifen, wodurch eine sichere Verriegelung und Rastfunktion des Betätigers (3) gewährleistet ist.

2. Sicherheitsschalter (2) nach Anspruch 1, **dadurch gekennzeichnet, dass** die Längsachsen der Verriegelungsbacken (14) in radialer Richtung verlaufen, wobei sich die Verlängerungen der Längsachsen im Mittelpunkt der Einführöffnung (A) schneiden, und wobei die Verriegelungsbacken (14) in Richtung ihrer Längsachsen auslenkbar sind.

3. Sicherheitsschalter (2) nach einem der Ansprüche 1 oder 2, **dadurch gekennzeichnet, dass** drei Verriegelungsbacken (14) vorgesehen sind, deren Längsachsen jeweils um 120° versetzt zueinander angeordnet sind.

4. Sicherheitsschalter (2) nach einem der Ansprüche 1 bis 3, **dadurch gekennzeichnet, dass** die Verriegelungsbacken (14) identisch ausgebildet sind.

5. Sicherheitsschalter (2) nach einem der Ansprüche 1 bis 4, **dadurch gekennzeichnet, dass** der Verriegelungseinheit (12) eine Zuhalteeinheit (17) zugeordnet ist, mittels der die Verriegelungsbacken (14) in ihren Verriegelungspositionen zugehalten sind.

6. Sicherheitsschalter (2) nach Anspruch 5, **dadurch gekennzeichnet, dass** die Zuhalteeinheit (17) eine Kulisse (18) mit einem Hohlraum aufweist, der von einem eine Innenkontur ausbildenden Wandsegment begrenzt ist, wobei in dem Hohlraum die Verriegelungsbacken (14) angeordnet sind, und wobei Segmente (23) der Innenkontur Mittel zur Zuhaltung der Verriegelungsbacken (14) ausbilden.

7. Sicherheitsschalter (2) nach Anspruch 6, **dadurch gekennzeichnet, dass** die Kulisse (18) um eine Drehachse drehbar ist.

8. Sicherheitsschalter (2) nach Anspruch 7, **dadurch gekennzeichnet, dass** die Kulisse (18) mittels eines elektrischen Antriebs drehbar ist.

9. Sicherheitsschalter (2) nach einem der Ansprüche 7 oder 8, **dadurch gekennzeichnet, dass** in ersten Drehstellungen der Kulisse (18) die Segmente (23) der Innenkontur dicht an den zweiten freien Enden der Verriegelungsbacken (14) anliegen, wodurch eine Bewegung der Verriegelungsbacken (14) aus der Verriegelungsposition heraus blockiert ist und somit die Zuhaltung bewirkt ist.

10. Sicherheitsschalter (2) nach einem der Ansprüche 7 bis 9, **dadurch gekennzeichnet, dass** in zweiten Drehstellungen der Kulisse (18) die zweiten freien Enden der Verriegelungsbacken (14) in Abstand zur Kulisse (18) liegen, so dass diese gegen die Federkräfte der Federeinheit (15) auslenkbar sind.

11. Sicherheitsschalter (2) nach einem der Ansprüche 8 bis 10, **dadurch gekennzeichnet, dass** dem elektrischen Antrieb eine mechanische Hilfsentriegelung (22) zugeordnet ist.

12. Sicherheitsschalter (2) nach einem der Ansprüche 1 bis 11, **dadurch gekennzeichnet, dass** die Positionen der Verriegelungsbacken (14) mittels Sensoren überwacht sind.

13. Sicherheitsschalteranordnung (1) mit einem Betätiger (3) und einem Sicherheitsschalter (2) nach einem der Ansprüche 1 bis 12, **dadurch gekennzeichnet, dass** der Sicherheitsschalter (2) eine Verriegelungseinheit (12) mit einer Anordnung von Verriegelungsbacken (14) aufweist, wobei jede Verriegelungsbacke (14) mittels einer Federeinheit (15) federnd gelagert ist, wobei die Verriegelungsbacken (14) konzentrisch angeordnet sind und jeweils mit einem ersten freien Ende einander zugeordnet sind und eine Einführöffnung (A) begrenzen, dass der Betätiger (3) einen Betätigerkopf (8) aufweist, wobei der Betätigerkopf (8) über die Einführöffnung (A) in eine Verriegelungsstellung einbringbar ist, wobei bei Passieren der Einführöffnung (A) der Betätigerkopf (8) die Verriegelungsbacken (14) gegen die Federkräfte der Federeinheit (15) auslenkt, wodurch die Einführöffnung (A) vergrößert ist, und wobei in der Verriegelungsstellung des Betätigers (3) die Verriegelungsbacken (14) in ihrer Verriegelungsposition den Betätiger (3) hintergreifen.

14. Sicherheitsschalteranordnung (1) nach Anspruch 13, **dadurch gekennzeichnet, dass** der Sicherheitsschalter (2) eine der Verriegelungseinheit (12) zugeordnete Zuhalteeinheit (17) aufweist, mittels derer eine Zuhaltung für den Betätiger (3) in der Verriegelungsstellung bewirkt ist, wobei hierzu mittels der Zuhalteeinheit (17) die den Betätigerkopf (8) hintergreifenden Verriegelungsbacken (14) in ihren Verriegelungspositionen zugehalten sind.

15. Sicherheitsschalteranordnung (1) nach einem der Ansprüche 13 oder 14, **dadurch gekennzeichnet, dass** die Verriegelungsstellung des Betätigers (3) dadurch überwacht ist, dass Signale eines Transponders (10) im Betätigerkopf (8) in einer Leseeinheit des Sicherheitsschalters (2) erfasst werden.

## Claims

1. Safety switch (2) with a locking unit (12), by means of which an associated actuator (3) is held in a locking setting, **characterised in that** the locking unit (12) comprises an arrangement of locking jaws (14), wherein each locking jaw is resiliently mounted by means of a spring unit (15), that the locking jaws (14) are arranged concentrically and associated with one another in each case by a first free end and bound an introduction opening (A), that the locking jaws are held in locking positions by means of the spring forces generated by the spring units (15), that the actuator (3) is guided by its front free end through the introduction opening (A), wherein the diameter of the front end of the actuator (3) is somewhat larger than the diameter of the introduction opening (A) bounded by the free ends of the locking jaws so that on passage of the front end of the actuator (3) the locking jaws are deflected against the spring forces of the spring units (15) whereby the introduction opening (A) is enlarged, and that when the actuator (3) is guided into its locking setting the locking jaws return to the locking position thereof through the spring forces of the spring unit (15) and engage behind the front end of the actuator (3), whereby a secure locking and detenting function of the actuator (3) is ensured.

2. Safety switch (2) according to claim 1, **characterised in that** the longitudinal axes of the locking jaws (14) run in radial direction, wherein the prolongations of the longitudinal axes intersect at the centre point of the introduction opening (A) and wherein the locking jaws (14) are deflectable in the direction of the longitudinal axes thereof.

3. Safety switch (2) according to one of claims 1 and 2, **characterised in that** three locking jaws (14) are provided, the longitudinal axes of which are arranged to be mutually offset by 120°.

4. Safety switch (2) according to any one of claims 1 to 3, **characterised in that** the locking jaws (14) are of identical construction.

5. Safety switch (2) according to any one of claims 1 to 4, **characterised in that** associated with the locking unit (12) is a retaining unit (17) by means of which the locking jaws (14) are retained in the locking positions thereof.

6. Safety switch (2) according to claim 5, **characterised in that** the retaining unit (17) comprises a guide (18) with a cavity which is bounded by a wall segment forming an inner contour, wherein the locking jaws (14) are arranged in the cavity and wherein segments (23) of the inner contour form means for retention of the locking jaws (14).

7. Safety switch (2) according to claim 6, **characterised in that** the guide (18) is rotatable about an axis of rotation.

8. Safety switch (2) according to claim 7, **characterised in that** the guide (18) is rotatable by means of an electric drive.

9. Safety switch (2) according to one of claims 7 and 8, **characterised in that** in first rotational settings of the guide (18) the segments (23) of the inner contour bear tightly against the second free ends of the locking jaws (14), whereby a movement of the locking jaws (14) out of the locking position is blocked and thus the retention is produced.

10. Safety switch (2) according to any one of claims 7 to 9, **characterised in that** in second rotational settings of the guide (18) the second free ends of the locking jaws (14) lie at a spacing from the guide (18) so that these are deflectable against the spring forces of the spring unit (15).

11. Safety switch (2) according to any one of claims 8 to 10, **characterised in that** a mechanical auxiliary locking means (22) is associated with the electric drive.

12. Safety switch (2) according to any one of claims 1 to 11, **characterised in that** the positions of the locking jaws (14) are monitored by means of sensors.

13. Safety switch arrangement (1) with an actuator (3) and a safety switch (2) according to any one of claims 1 to 12, **characterised in that** the safety switch (2) comprises a locking unit (12) with an arrangement of locking jaws (14), wherein each locking jaw (14) is resiliently mounted by means of a spring unit (15), wherein the locking jaws (14) are arranged concentrically and are associated with one another in each case by a first free end and bound an introduction opening (A), wherein the actuator (3) comprises an actuator head (8), wherein the actuator head (8) can be brought by way of the introduction opening (A) into a locking setting, wherein on passing the introduction opening (A) of the actuator head (8) the locking jaws (14) deflect against the spring forces of the spring unit (15), whereby the introduction opening (A) is enlarged, and wherein in the locking setting of the actuator (3) the locking jaws (14) in the locking position thereof engage behind the actuator (3).

14. Safety switch arrangement (1) according to claim 13, **characterised in that** the safety switch (2) comprises a retaining unit (17) which is associated with the locking unit (12) and by means of which a retention for the actuator (3) in the locking setting is produced, wherein for that purpose the locking jaws (14) engaging behind the actuator head (8) are retained in their locking positions by means of the retaining unit (17).

15. Safety switch arrangement (1) according to one of claims 13 and 14, **characterised in that** the locking setting of the actuator (3) is monitored through signals of a transponder (10) in the actuator head (8) being detected in a reader unit of the safety switch (2).

## Revendications

1. Interrupteur de sécurité (2) muni d'une unité de verrouillage (12) au moyen de laquelle un actionneur (3) associé est maintenu dans une position de verrouillage, **caractérisé par le fait que** l'unité de verrouillage (12) comporte un ensemble de mors de verrouillage (14), chaque mors de verrouillage étant monté élastiquement au moyen d'une unité à ressort (15) ; **par le fait que** les mors de verrouillage (14) sont disposés concentriquement, sont associés les uns aux autres par une première extrémité libre respective, et délimitent un orifice d'insertion (A) ; **par le fait que** lesdits mors de verrouillage sont maintenus en des emplacements de verrouillage au moyen des forces élastiques engendrées par les unités à ressorts (15) ; **par le fait que** l'actionneur (3) est guidé à travers l'orifice d'insertion (A) par son extrémité antérieure libre, le diamètre des extrémités antérieures dudit actionneur (3) étant sensiblement supérieur au diamètre dudit orifice d'insertion (A) délimité par les extrémités libres des mors de verrouillage, de sorte que lesdits mors de verrouillage sont déviés en opposition aux forces élastiques desdites unités à ressorts (15) lors du guidage de l'extrémité antérieure dudit actionneur (3), ce qui provoque un agrandissement dudit orifice d'insertion (A) ; et **par le fait que**, lorsque l'actionneur (3) est ensuite inséré en occupant sa position de verrouillage, lesdits mors de verrouillage retournent à leur emplacement de verrouillage, sous l'action des forces élastiques de l'unité à ressort (15), et emprisonnent par-derrière l'extrémité antérieure dudit actionneur (3), ce qui a pour effet de garantir une fonction d'encliquetage et un verrouillage sûrs dudit actionneur (3).

2. Interrupteur de sécurité (2) selon la revendication 1, **caractérisé par le fait que** les axes longitudinaux des mors de verrouillage (14) s'étendent dans la direction radiale, sachant que les prolongements desdits axes longitudinaux se coupent au centre de l'orifice d'insertion (A), et sachant que lesdits mors de verrouillage (14) peuvent être déviés dans la direction de leurs axes longitudinaux.

3. Interrupteur de sécurité (2) selon l'une des revendications 1 ou 2, **caractérisé par** la présence de trois mors de verrouillage (14) dont les axes longitudinaux sont disposés, à chaque fois, avec décalage mutuel de 120°.

4. Interrupteur de sécurité (2) selon l'une des revendications 1 à 3, **caractérisé par le fait que** les mors de verrouillage (14) sont de réalisations identiques.

5. Interrupteur de sécurité (2) selon l'une des revendications 1 à 4, **caractérisé par le fait qu'**une unité (17) de maintien à la fermeture, au moyen de laquelle les mors de verrouillage (14) sont maintenus fermés en leurs emplacements de verrouillage, est associée à l'unité de verrouillage (12).

6. Interrupteur de sécurité (2) selon la revendication 5, **caractérisé par le fait que** l'unité (17) de maintien à la fermeture comporte une pièce coulissante (18) dotée d'une cavité délimitée par un segment de paroi matérialisant un profil intérieur, les mors de verrouillage (14) étant logés dans ladite cavité, et des segments (23) dudit profil intérieur constituant des moyens affectés au maintien desdits mors de verrouillage (14) à la fermeture.

7. Interrupteur de sécurité (2) selon la revendication 6, **caractérisé par le fait que** la pièce coulissante (18) est apte à tourner autour d'un axe de rotation.

8. Interrupteur de sécurité (2) selon la revendication 7, **caractérisé par le fait que** la pièce coulissante (18) peut être mise en rotation au moyen d'un entraînement électrique.

9. Interrupteur de sécurité (2) selon l'une des revendications 7 ou 8, **caractérisé par le fait que** les segments (23) du profil intérieur sont intimement en applique contre les secondes extrémités libres des mors de verrouillage (14), dans des premières positions que la pièce coulissante (18) a prises par rotation, ce qui a pour effets de bloquer un mouvement de sortie desdits mors de verrouillage (14) hors de l'emplacement de verrouillage, et de provoquer ainsi le maintien à la fermeture.

10. Interrupteur de sécurité (2) selon l'une des revendications 7 à 9, **caractérisé par le fait que** les secondes extrémités libres des mors de verrouillage (14) se trouvent à distance de la pièce coulissante (18) dans des secondes positions que ladite pièce coulissante (18) a prises par rotation, de sorte que lesdites extrémités peuvent être déviées en opposition aux forces élastiques de l'unité à ressort (15).

11. Interrupteur de sécurité (2) selon l'une des revendications 8 à 10, **caractérisé par le fait qu'**un déverrouillage auxiliaire mécanique (22) est associé à l'entraînement électrique.

12. Interrupteur de sécurité (2) selon l'une des revendications 1 à 11, **caractérisé par le fait que** les emplacements des mors de verrouillage (14) sont surveillés au moyen de capteurs.

13. Dispositif (1) à interrupteur de sécurité, équipé d'un actionneur (3) et d'un interrupteur de sécurité (2) conforme à l'une des revendications 1 à 12, **caractérisé par le fait que** l'interrupteur de sécurité (2) est muni d'une unité de verrouillage (12) comportant un ensemble de mors de verrouillage (14), chaque mors de verrouillage (14) étant monté élastiquement au moyen d'une unité à ressort (15), sachant que lesdits mors de verrouillage (14) sont disposés concentriquement, sont associés les uns aux autres par une première extrémité libre respective, et délimitent un orifice d'insertion (A) ; et **par le fait que** l'actionneur (3) est pourvu d'une tête (8), laquelle tête (8) de l'actionneur peut être amenée à une position de verrouillage à travers l'orifice d'insertion (A), sachant que, lors du franchissement dudit orifice d'insertion (A), ladite tête (8) de l'actionneur dévie lesdits mors de verrouillage (14) en opposition aux forces élastiques de l'unité à ressort (15), agrandissant ainsi ledit orifice d'insertion (A), et sachant que, dans la position de verrouillage de l'actionneur (3), lesdits mors de verrouillage (14) occupant leur emplacement de verrouillage emprisonnent ledit actionneur (3) par-derrière.

14. Dispositif (1) à interrupteur de sécurité, selon la revendication 13, **caractérisé par le fait que** l'interrupteur de sécurité (2) est nanti d'une unité (17) de maintien à la fermeture, associée à l'unité de verrouillage (12) et au moyen de laquelle un maintien à la fermeture est conféré à l'actionneur (3) occupant la position de verrouillage, sachant qu'à cet effet, les mors de verrouillage (14), emprisonnant par-derrière la tête (8) dudit actionneur, sont maintenus fermés en leurs emplacements de verrouillage au moyen de ladite unité (17) de maintien à la fermeture.

15. Dispositif (1) à interrupteur de sécurité, selon l'une des revendications 13 ou 14, **caractérisé par le fait que** la position de verrouillage de l'actionneur (3) est surveillée par détection, dans une unité de lecture de l'interrupteur de sécurité (2), de signaux d'un transpondeur (10) intégré dans la tête (8) dudit actionneur.
